# EUROPÄISCHE PATENTSCHRIFT

(11) **EP 1 316 456 B1**
(45) Veröffentlichungstag und Bekanntmachung des Hinweises auf die Patenterteilung: **07.11.2007**
(21) Anmeldenummer: 02026026.1
(22) Anmeldetag: 21.11.2002
(51) Int. Cl.: B60J 10/00, B60J 10/02

(54) **Aufnahmerahmen mit Dichtungsprofil für eine stationäre Fensterscheibe**
Holding frame with sealing profile for a fixed window
Cadre de support avec un joint d'étanchéité pour une fenêtre fixe

(30) Priorität: 03.12.2001 DE 10159251
(43) Veröffentlichungstag der Anmeldung: 04.06.2003
(73) Patentinhaber: Metzeler Automotive Profile Systems GmbH, 88131 Lindau/Bodensee (DE)
(72) Erfinder: Krause, Fritz, 88239 Wangen (DE)
(74) Vertreter: Preissner, Nicolaus

(56) Entgegenhaltungen:
- EP-A- 0 704 597
- EP-A- 1 036 910
- DE-C- 19 632 843
- FR-A- 2 216 137
- PATENT ABSTRACTS OF JAPAN vol. 009, no. 215 (M-409), 3. September 1985 (1985-09-03) & JP 60 076420 A (KINUGAWA GOMU KOGYO KK), 30. April 1985 (1985-04-30)

## Beschreibung

Die Erfindung betrifft einen Aufnahmerahmen für eine stationäre Fensterscheibe, insbesondere an einer Kraftfahrzeugtür sowie ein Herstellungsverfahren für einen derartigen Aufnahmerahmen.

Bei bekannten Hintertüren von Kraftfahrzeugen ist eine bewegliche Fensterscheibe vorgesehen, die in einem zugeordneten Fensterschacht versenkbar ist. Im Bereich der C-Säule ist eine stationäre Fensterscheibe angeordnet, die mittels eines Trennstegs von der beweglichen Fensterscheibe getrennt ist.

Aus der DE 196 32 843 C1 ist ein Profilrahmen bekannt, der zur Aufnahme einer beweglichen Fensterscheibe und einer stationären Fensterscheibe ausgebildet ist. Zur Führung und Abdichtung der beweglichen Fensterscheibe weist der Profilrahmen extrudierte Dichtungsprofile auf. Die einzelnen Profilabschnitte sind durch ein thermoplastisches Material miteinander verbunden. Weiterhin weist der Profilrahmen eine Scheibeneinfassung für die stationäre Fensterscheibe auf, die ebenfalls aus thermoplastischem Material besteht. Der bekannte Profilrahmen übernimmt im Bereich der Dreieckscheibe keine Dichtfunktion zur Abdichtung des Spalts zwischen der Fahrzeugtür und dem Seitenbereich der Karosserie.

Weiterhin offenbart die EP 1 036 910 A2 eine Dichtungsanordnung, die zum Abdichten einer Kraftfahrzeugtür oder einer Gepäckraumklappe dient. Die Dichtungsanordnung weist eine Dichtung auf, die einen Befestigungsbereich zum Aufstecken auf einen Türflansch aufweist. Der Befestingungsbereich weist zwei davon abragende Dichtlippen auf, die mit einer Beflockung versehen sind.

Der Befestigungsbereich ist weiter annähernd U-förmig und weist eine Basis auf, die sich annähernd parallel zu der Fensterscheibe erstreckt.

Eine Dichtungsanordnung für eine bewegliche Fensterscheibe wird ferner in der EP 0 704 597 A2 beschrieben. Die Dichtungsanordnung weist ein einteiliges Grundprofil auf, das eine Rahmendichtung und eine Fenster schachtdichtung bildet.

Der Erfindung liegt die **Aufgabe** zugrunde, bei einem Aufnahmerahmen der eingangs genannten Art eine gleichzeitige Abdichtung der Tür gegenüber dem Seitenbereich der Karosserie zu erzielen.

Zur **Lösung** dieser Aufgabe wird ein Aufnahmerahmen mit den Merkmalen des Patentanspruchs 1 vorgeschlagen.

Erfindungsgemäss ist der Aufnahmerahmen mit einem extrudierten Dichtungsprofil aus einem elastomeren Material versehen, das eine Befestigungsbereich zum Aufstecken auf einen Flansch der Fahrzeugtür und mindestens eine vom Befestigungsbereich abragende Dichtlippe aufweist, die mit einer Beflockung versehen ist, wobei der Befestingungsbereich eine Basis aufweist, die sich annähernd parallel zu der Fensterscheibe erstreckt. Weiterhin weist der Aufnahmebereich einen an das Dichtungsprofil angeformte Scheibeneinfassung auf, die eine Aufnahmenut für den Randbereich der Fensterscheibe aufweist wobei die Scheibeninfassung einen Abschnitt aufweist, der die Basis des Befestigungsbereichs umgreift. Somit kann der erfindungsgemässe Aufnahmerahmen einerseits die stationäre Fensterscheibe aufnehmen und andererseits den zwischen der Fahrzeugtür und dem Seitenbereich der Karosserie vorliegenden Spalt abdichten. Der Aufnahmerahmen kann hierbei in einfacher Weise auf einen von der Fahrzeugtür abragenden Flansch aufgesteckt werden, wodurch die Montage besonders einfach ist. Nachdem das extrudierte Dichtungsprofil mit einer Beflockung versehen ist, entfällt ein nachträgliches Beflocken beider Dichtlippen nach der Anformung der Scheibeneinfassung. Hierdurch ist die Herstellung einfach.

Vorteilhafte Ausgestaltungen der Erfindung ergeben sich aus den Unteransprüchen.

Vorteilhaft weist der Befestigungsbereich eine Verstärkungseinlage, insbesondere aus Metall, auf. Die Verstärkungseinlage wird bei der Extrusion des Dichtungsprofils eingebracht. Durch die Verstärkungseinlage weist der Aufnahmerahmen einen festen Sitz an dem Türflansch auf.

Bei einer anderen vorteilhaften Ausgestaltung ist an das extrudierte Dichtungsprofil eine zweite Dichtlippe angeformt, die versetzt zu der ersten Dichtlippe angeordnet ist. Vorteilhaft erfolgt die Anformung der zweiten Dichtlippe gleichzeitig mit der Anformung der Scheibeneinfassung an das extrudierte Dichtungsprofil.

Hierbei ist die erste Dichtlippe vorteilhaft einteilig mit der Scheibeneinfassung ausgebildet.

Vorteilhaft ist die zweite Dichtlippe mit einer Beflockung versehen.

In vorteilhafter Ausgestaltung kann die Scheibeneinfassung bezüglich der Längsachse des Aufnahmerahmens verschiedene Querschnitte aufweisen.

In vorteilhafter Ausgestaltung weist die Scheibeneinfassung ein Befestigungselement auf, das formschlüssig an der Fahrzeugtür festlegbar ist. Das Befestigungselement wird vorteilhaft bei der Herstellung der Scheibeneinfassung angeformt.

Erfindungsgemäss wird weiterhin ein Verfahren zur Herstellung eines Aufnahmerahmens mit den Merkmalen gemäss Anspruch 8 vorgeschlagen.

Das erfindungsgemässe Verfahren sieht vor, dass das Dichtungsprofil aus elastomerem Material extrudiert wird, dass die mindestens eine Dichtlippe des Dichtungsprofils mit einer Beflockung versehen wird, dass das Dichtungsprofil in eine Vulkanisationsform eingelegt wird und dass an das Dichtungsprofil die Scheibeneinfassung so angeformt wird, dass die Scheibeneinfassung einen Abschnitt aufweist, der die Basis des Befestigungsbereichs umgreift. Nachdem das extrudierte Dichtungsprofil bereits mit einer Beflockung in die Vulkanisationsform eingelegt wird, kann die Nachbeflockung in einem nachgeschalteten Prozess entfallen.

In vorteilhafter Weiterbildung wird an das extrudierte Dichtungsprofil eine zweite Dichtlippe angeformt, die mit Abstand zu der ersten Dichtlippe angeordnet ist. Hierbei wird die zweite Dichtlippe in einem nachgeschalteten Schritt mit einer Beflockung versehen.

Nachfolgend wird die Erfindung an Hand von Ausführungsbeispielen beschrieben, die in schematischer Weise in der Zeichnung dargestellt sind. Hierbei zeigen:
- Fig. 1: eine Seitenansicht auf eine hintere Fahrzeugtür, die mit einem erfindungsgemässen Aufnahmerahmen versehen ist;
- Fig. 2: einen Schnitt längs der Linie II-II in Fig. 1 bei einer ersten Ausführungsform des erfindungsgemässen Aufnahmerahmens;
- Fig. 3: einen Schnitt längs der Linie II-II in Fig. 1 bei einer zweiten Ausführungsform des erfindungsgemässen Aufnahmerahmens;
- Fig. 4: einen Schnitt längs der Linie II-II in Fig. 1 bei einer dritten erfindungsgemässen Ausführungsform und
- Fig. 5: einen Schnitt längs der Linie II-II in Fig. 1 bei einer vierten erfindungsgemässen Ausführungsform.

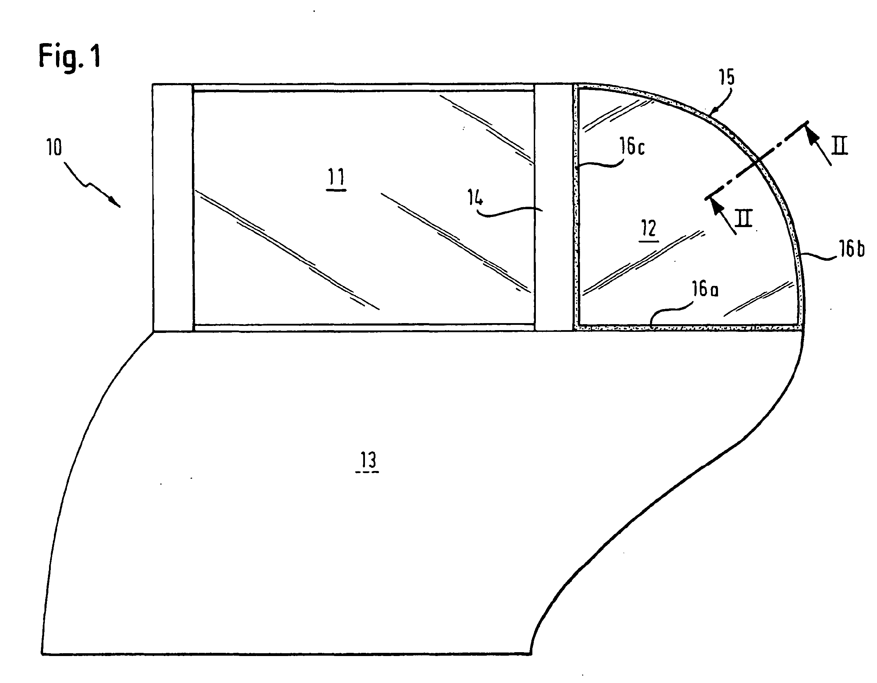

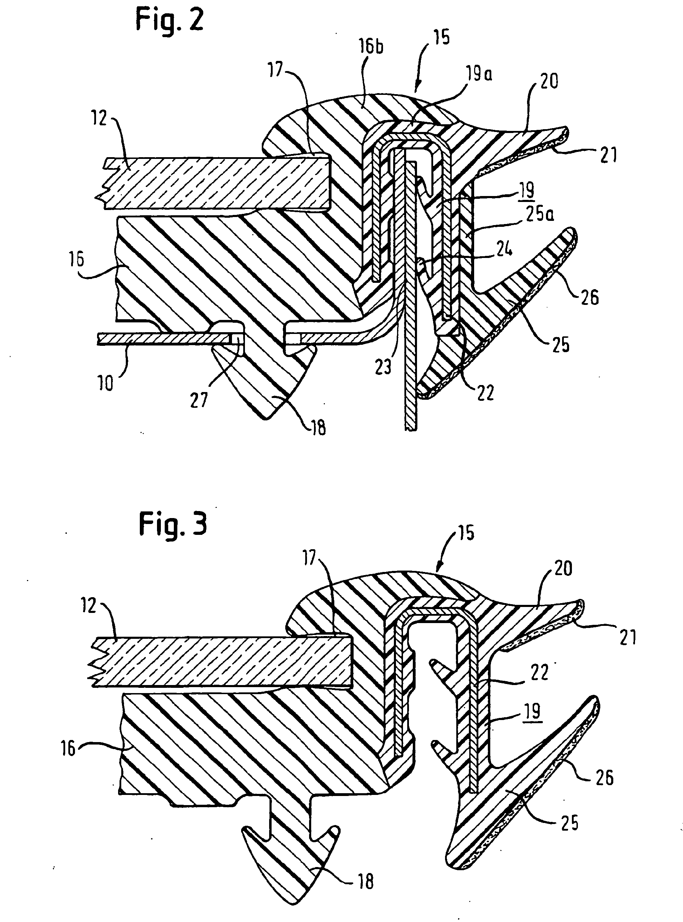

Fig. 1 zeigt die Seitenansicht einer hinteren Fahrzeugtür 10 eines nicht näher dargestellten Kraftfahrzeugs. Die Fahrzeugtür 10 weist eine bewegliche Fensterscheibe 11 auf, die in einen zugeordneten Fensterschacht 13 der Fahrzeugtür 10 versenkbar ist. Weiterhin ist an der Fahrzeugtür 10 eine stationäre Fensterscheibe 12 vorgesehen. Die stationäre Fensterscheibe 12 ist durch einen in Vertikalrichtung verlaufenden Trennsteg 14 von der beweglichen Fensterscheibe 11 getrennt. Die stationäre Fensterscheibe 12 ist im Bereich ihrer Oberkante an einem Aufnahmerahmen 15 aufgenommen, dessen nähere Ausgestaltung an Hand von Fig. 2 erläutert werden soll, die einen Schnitt längs der Linie II-II von Fig. 1 zeigt. Der Aufnahmerahmen 15 dient einerseits der Festlegung der stationären Fensterscheibe 12 und andererseits der Abdichtung des Spalts zwischen der Fahrzeugtür 10 und dem Seitenbereich der Karosserie. Hierzu weist der Aufnahmerahmen 15 ein Dichtungsprofil 19 auf, das aus einem elastomeren Material, insbesondere EPDM, extrudiert ist. Das Dichtungsprofil 19 besitzt einen Befestigungsbereich 19a, der näherungsweise U-förmig ausgebildet ist. In den Befestigungsbereich 19a ist eine metallische Verstärkungseinlage 22 eingebracht. Von der Innenseite des Befestigungsbereichs 19a ragen schräg zur Innenwand verlaufende Befestigungslippen 24 ab. Weiterhin weist das Dichtungsprofil 19 eine schräg vom Befestigungsbereich 19a abragende erste Dichtlippe 20 auf. Die erste Dichtlippe 20 ist an ihrem dem Seitenbereich der Karosserie zugewandten Bereich mit einer Beflockung 21 versehen. Die Beflockung 21 wird bereits bei der Herstellung des Dichtungsprofils 19 aufgebracht.

An das Dichtungsprofil 19 ist eine Scheibeneinfassung 16 angeformt, die ebenfalls aus einem elastomeren Material besteht. Die Scheibeneinfassung 16 weist eine näherungsweise U-förmige Aufnahmenut 17 für die stationäre Fensterscheibe 12 auf. Zur Festlegung an der Fahrzeugtür 10 weist die Scheibeneinfassung 16 ein Befestigungselement 18 auf, das formschlüssig an einer Aufnahmeöffnung 26 der Fahrzeugtür 10 festlegbar ist. Wie aus Fig. 2 ersichtlich ist, umgreift ein Bereich 16b den Horizontalschenkel des Befestigungsbereichs 19a und erstreckt sich bis zu der Basis der Dichtlippe 20.

An das Dichtungsprofil 19 ist eine zweite Dichtlippe 25 angeformt, die mit Abstand zu der ersten Dichtlippe 20 angeordnet ist und ebenfalls schräg vom Befestigungsbereich 19a verlaufend abragt. Die zweite Dichtlippe 25 weist eine Beflockung 26 auf. Ein Bereich 25a der Dichtlippe 25 verläuft an der Aussenseite des Befestigungsbereichs 19a bis zu der ersten Dichtlippe 20.

Die Anformung der Scheibeneinfassung 16 und der zweiten Dichtlippe 25 erfolgt in einer Vulkanisationsform, in die elastomeres Material eingespritzt wird. Nach dem Formprozess wird auf die zweite Dichtlippe 25 die Beflokkung 26 aufgebracht.

In der Vulkanisationsform wird unter Bezugnahme auf Fig. 1 der Bereich 16b der Scheibeneinfassung 16 angeformt, der die Oberkante der stationären Scheibe 12 aufnimmt. Weiterhin kann auch der an der Türbrüstung verlaufende Bereich 16a und der am Trennsteg 14 verlaufende Bereich 16c als Formteil hergestellt werden. Hierbei handelt es sich jeweils um Formteile, die eine Aufnahmenut für die stationäre Fensterscheibe 12 aufweisen.

Auf diese Weise wird ein geschlossener Aufnahmerahmen 15 erhalten, in den die stationäre Fensterscheibe 12 eingeknüpft wird.

Es ist aber auch möglich, die stationäre Fensterscheibe 12 in die Vulkanisationsform einzulegen und diese mit der Scheibeneinfassung 16 zu umspritzen.

Zur Montage des Aufnahmerahmens 15 wird der Befestigungsbereich 19a auf den Türflansch 23 aufgesteckt. Hierbei gewährleistet die metallische Verstärkungseinlage 22 und die schräg verlaufenden Befestigungslippen 24 einen festen Sitz.

Das an der Scheibeneinfassung 16 vorgesehene Befestigungselement 18 wird bei der Montage durch eine Aufnahmeöffnung 27 der Fahrzeugtür 10 geführt. Das Befestigungselement 18 wird formschlüssig an der Aufnahmeöffnung 27 fixiert.

Zur Beschreibung der nachfolgenden in den Figuren 3 bis 5 dargestellten Ausführungsbeispiele werden gleiche Bezugszeichen für identische oder funktionell gleichwirkende Teile verwendet.

Figur 3 zeigt ein weiteres Ausführungsbeispiel eines Aufnahmerahmens 15, bei dem das Dichtungsprofil 19 zwei Dichtlippen 20, 25 aufweist. Die Dichtlippen 20, 25 werden bereits bei der Extrusion des Dichtungsprofils 19 erhalten. Die Dichtlippen 20, 25 sind jeweils mit einer Beflockung 21, 26 versehen, die nach der Extrusion des Dichtungsprofils 19 aufgebracht wird.

Weiterhin weist der Aufnahmerahmen 15 eine Scheibeneinfassung 16 auf, die der Scheibeneinfassung 16 der in Figur 2 dargestellten Ausführungsform entspricht. Die Scheibeneinfassung 16 wird ebenfalls in einer Vulkanisationsform angespritzt.

Bei dem in Figur 3 dargestellten Aufnahmerahmen 15 kann eine nachträgliche Beflockung entfallen, da bereits beide Dichtlippen 20, 25 mit einer Beflockung versehen sind.

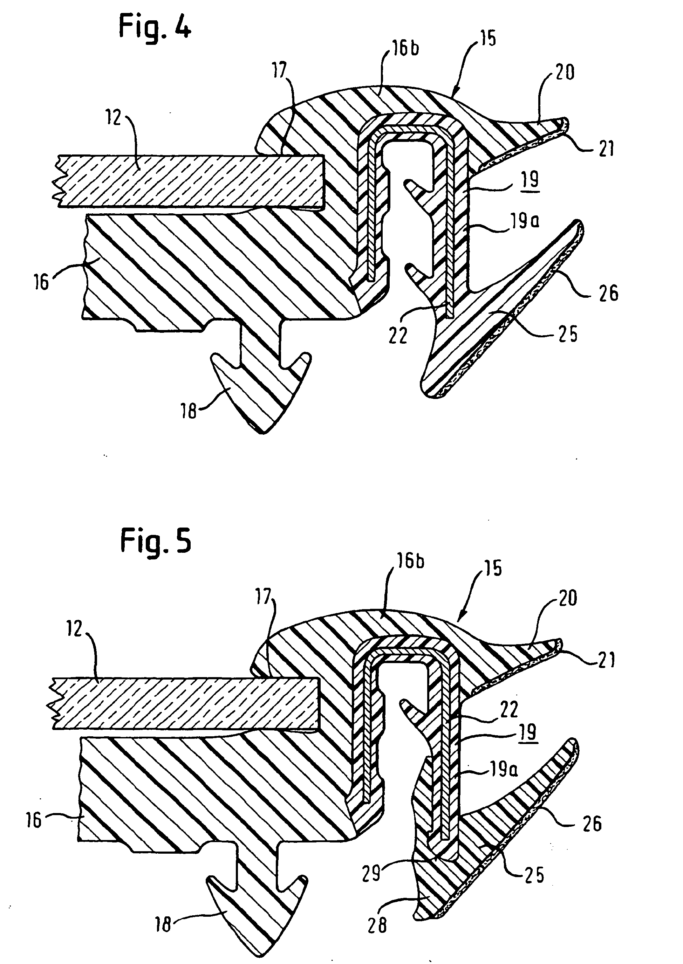

Bei dem in Figur 4 dargestellten Ausführungsbeispiel eines Aufnahmerahmens 15 weist das Dichtungsprofil 19 eine bei der Extrusion erhaltene Dichtlippe 25 auf, die vom Endbereich eines Schenkels des Befestigungsbereichs 19a abragt. Die Dichtlippe 25 ist mit einer Beflockung 26 versehen.

Die an das Dichtungsprofil 19 angeformte Scheibeneinfassung 16 ist einteilig mit einer ersten Dichtlippe 20 ausgebildet, die vom Befestigungsbereich 1 9a abragt. Somit wird die erste Dichtlippe 20 erst in der Vulkanisationsform angespritzt.

Zum Erhalt der Beflockung 21 wird eine Nachbeflockung durchgeführt. Hierbei ist es vorteilhaft, daß die Dichtlippe 25 zur Beflockung weggeklappt werden kann.

Figur 5 zeigt einen weiteren Aufnahmerahmen 15, bei dem das Dichtungsprofil 19 lediglich einen Befestigungsbereich 19a und keine Dichtlippen aufweist. Die erste Dichtlippe 20 ist einteilig mit der Scheibeneinfassung 1 6 ausgebildet und wird durch Anspritzen in einer Vulkanisationsform erhalten.

Die zweite Dichtlippe 25 ist an einem separaten Profilteil 28 ausgebildet, das eine Aufnahme 29 zur Festlegung an einem Schenkel des Befestigungsbereichs 19a aufweist.

Bei den in Figur 4 und 5 dargestellten Ausführungsbeispielen wird durch die integrierte Anformung der ersten Dichtlippe 20 eine gleichmäßige Außenkontur des Aufnahmerahmens 15 erzielt.

### Bezugszeichenliste

- 10 :: Fahrzeugtür
- 11 :: bewegliche Fensterscheibe
- 12 :: stationäre Fensterscheibe
- 13 :: Fensterschacht
- 14 :: Trennsteg
- 15 :: Aufnahmerahmen
- 16 :: Scheibeneinfassung
- 16a :: Bereich Scheibeneinfassung
- 16b :: Bereich Scheibeneinfassung
- 16c :: Bereich Scheibeneinfassung
- 17 :: Aufnahmenut
- 18 :: Befestigungselement
- 19 :: Dichtungsprofil
- 19a :: Befestigungsbereich

- 20 :: erste Dichtlippe
- 21 :: Beflockung
- 22 :: Verstärkungseinlage
- 23 :: Türflansch
- 24 :: Befestigungslippe
- 25 :: zweite Dichtlippe
- 25a :: Bereich
- 26 :: Beflockung
- 27 :: Aufnahmeöffnung
- 28 :: Profilteil
- 29 :: Aufnahme

## Patentansprüche

1. Aufnahmerahmen (15) für eine stationäre Fensterscheibe (12) an einer Kraftfahrzeugtür (10), mit
einem Dichtungsprofil (19), das aus einem elastomeren Material extrudiert ist und einen Befestigungsbereich (19a) zum Aufstecken auf einen Flansch (23) und mindestens eine von dem Befestigungsbereich (19a) abragende Dichtlippe (20), die mit einer Beflockung (21) versehen ist, aufweist,
wobei der Befestigungsbereich (19a) im Querschnitt annähernd U-förmig ist und eine Basis aufweist, die sich annähernd parallel zu der Fensterscheibe (12) erstreckt, **dadurch gekennzeichnet, dass** der Aufnahmerahmen,
eine Scheibeneinfassung (16) aufweist, die an das Dichtungsprofil angeformt ist und eine Aufnahmenut (17) für den Randbereich der Fensterscheibe (12) aufweist, wobei die Scheibeneinfassung (16) einen Abschnitt (16b) aufweist, der die Basis des Befestigungsbereichs (19a) umgreift.

2. Aufnahmerahmen nach Anspruch 1, **dadurch gekennzeichnet, dass** der Befestigungsbereich (19a) eine Verstärkungseinlage (22), insbesondere aus Metall, aufweist.

3. Aufnahmerahmen nach Anspruch 1 oder 2, **dadurch gekennzeichnet, dass** an das extrudierte Dichtungsprofil (19) eine zweite Dichtlippe (25) angeformt ist, die versetzt zu der ersten Dichtlippe (20) angeordnet ist.

4. Aufnahmerahmen nach Anspruch 3, **dadurch gekennzeichnet, dass** die erste Dichtlippe (20) einteilig mit der Scheibeneinfassung (16) ausgebildet ist.

5. Aufnahmerahmen nach Anspruch 3 oder 4, **dadurch gekennzeichnet, dass** die zweite Dichtlippe (25) mit einer Beflockung (26) versehen ist.

6. Aufnahmerahmen nach einem der Ansprüche 1 bis 5, **dadurch gekennzeichnet, dass** die Scheibeneinfassung (16) bezüglich der Längsachse des Aufnahmerahmens (15) mit verschiedenen Querschnitten ausgebildet ist.

7. Aufnahmerahmen nach einem der Ansprüche 1 bis 6, **dadurch gekennzeichnet, dass** die Scheibeneinfassung (16) ein Befestigungselement (18) aufweist, das formschlüssig an der Fahrzeugtür (10) festlegbar ist.

8. Verfahren zur Herstellung eines Aufnahmerahmens (15) nach einem der Ansprüche 1 bis 7 mit folgenden Verfahrensschritten:
a) das Dichtungsprofil (19) wird aus einem elastomeren Material extrudiert;
b) die mindestens eine Dichtlippe (20) des Dichtungsprofils (19) wird mit einer Beflockung (21) versehen;
c) das Dichtungsprofil (19) wird in eine Vulkanisationsform eingelegt und
d) an das Dichtungsprofil (19) wird die Scheibeneinfassung (16) so angeformt, dass die Scheibeneinfassung (16) einen Abschnitt (16b) aufweist, der die Basis des Befestigungsbereichs (19a) umgreift.

9. Verfahren nach Anspruch 8, **dadurch gekennzeichnet, dass** an das extrudierte Dichtungsprofil (19) eine zweite Dichtlippe (25) angeformt wird, die mit Abstand zu der ersten Dichtlippe (20) angeordnet ist.

10. Verfahren nach Anspruch 9, **dadurch gekennzeichnet, dass** die zweite Dichtlippe (25) in einem nachgeschalteten Schritt mit einer Beflockung (26) versehen wird.

## Claims

1. A housing frame (15) for a stationary window pane (12) particularly of a motor vehicle door (10) comprising
an extruded sealing profile (19) made of an elastomer material and having a fixing section (19a) for attaching to a flange (23) and at least one sealing lip (20) extending from the fixing section (19a) that is provided with a flock coating (21),
whereby the fixing section (19a) has a nearly U-shaped cross-section as well as a base portion which extends approximately parallel to the window pane (12) and
**characterised in that** a window pane holder (16) is moulded on the sealing profile provided with a receiving groove (17) to accomodate the edge of the window pane (12), whereby the window pane holder (16) is provided with a section (16a) which encompasses the base portion of the fixing section (19a).

2. A housing frame according to Claim 1 **characterised in that** the fixing section (19a) is provided with a reinforcing insert (22) in particular made of metal.

3. A housing frame according, to Claim 1 or 2 **characterised in that** said extruded sealing profile (19) has a second sealing lip positioned at a distance from the first sealing lip (20).

4. A housing frame according to Claim 3 **characterised in that** the first sealing lip (20) is formed as one piece with the window-pane holder (16).

5. A housing frame according to Claim 3 or 4 **characterised in that** the second sealing lip (25) is provided with a flock coating (26).

6. A housing frame according, to any of Claims 1 to 5 **characterised in that** the window-pane holder (16) has a variety of cross-sectional shapes along the longitudinal axis of the housing frame (15)

7. A housing frame according to any of Claims 1 to 6 **characterised in that** the window-pane holder (16) is provided with a fixing section (18) which can be attached positively to the door of a motor vehicle (10).

8. Process for the production of a housing frame according to any of Claims 1 to 7 comprising the following procedural steps:
(a) the sealing profile (19) is made by extrusion of an elastomer material;
(b) at least one sealing lip (20) of the sealing profile (19) is provided with a flock coating (21);
(c) the sealing profile (19) is placed in a vulcanisation mould and
(d) the window-pane holder (16) is moulded on the sealing profile (19) so that the holder (16) is provided with a section (16b) which encompasses the base portion of the fixing section (19a).

9. Process according to Claim 8 **characterised in that** the extruded sealing profile (19) is constructed with a second sealing lip (25) positioned at a distance from the first sealing lip (20).

10. Process according to Claim 9 **characterised in that**, in a subsequent step, the second sealing lip (25) is provided with a flock coating (26).

## Revendications

1. Cadre de réception (15) pour une vitre de fenêtre stationnaire (12), en particulier sur une porte de véhicule (10), comprenant
un profil d'étanchéité (19), qui est extrudé à partir d'un matériau élastomère et qui comprend une zone de fixation (19a) destinée à être emboîtée sur une bride (23), et au moins une lèvre d'étanchement (20) qui dépasse de la zone de fixation (19a) et qui est pourvue d'un flocage (21),
la zone de fixation (19a) étant approximativement en forme de U en section transversale et présente une base qui s'étend approximativement parallèlement à la vitre de fenêtre (12), **caractérisé en ce qu'**il comprend une monture de vitre (16) qui est conformée sur le profil d'étanchéité et qui comprend une gorge de réception (17) pour la zone de bordure de la vitre de fenêtre (12),
et ladite monture de vitre (16) comprend un tronçon (16b) qui entoure la base de la zone de fixation (19a).

2. Cadre de réception selon la revendication 1, **caractérisé en ce que** la zone de fixation (19a) comprend un insert de renforcement (22), en particulier en métal.

3. Cadre de réception selon la revendication 1 ou 2, **caractérisé en ce qu'**une seconde lèvre d'étanchement (25) est conformée sur le profil d'étanchéité extrudé (19), ladite lèvre étant agencée de façon décalée par rapport à la première lèvre d'étanchement (20).

4. Cadre de réception selon la revendication 3, **caractérisé en ce que** la première lèvre d'étanchement (20) est réalisée d'une seule pièce avec la monture de vitre (16).

5. Cadre de réception selon la revendication 3 ou 4, **caractérisé en ce que** la seconde lèvre d'étanchement (25) est pourvue d'un flocage (26).

6. Cadre de réception selon l'une des revendications 1 à 5, **caractérisé en ce que** la monture de vitre (16) est réalisé avec différentes sections transversales par rapport à l'axe longitudinal du cadre de réception (15).

7. Cadre de réception selon l'une des revendications 1 à 6, **caractérisé en ce que** la monture de vitre (16) comprend un élément de fixation (18), qui peut être immobilisé par coopération de formes sur la porte de véhicule (10).

8. Procédé pour fabriquer un cadre de réception (15) selon l'une des revendications 1 à 7, comprenant les étapes de procédé suivantes :
a) le profil d'étanchéité (19) est extrudé à partir d'un matériau élastomère ;
b) ladite au moins une lèvre d'étanchement (20) du profil d'étanchéité (19) est pourvue d'un flocage (21);
c) le profil d'étanchéité (19) est mis en place dans un moule de vulcanisation ; et
d) la monture de vitre (16) est conformée sur le profil d'étanchéité (19) de telle manière que la monture de vitre (16) comprend un tronçon (16b) qui entoure la base de la zone de fixation (19a).

9. Procédé selon la revendication 8, **caractérisé en ce qu'**une seconde lèvre d'étanchement (25) est conformée sur le profil d'étanchéité extrudé (19), ladite lèvre étant agencée à distance de la première lèvre d'étanchement (20).

10. Procédé selon la revendication 9, **caractérisé en ce que** la seconde lèvre d'étanchement (20) est pourvue d'un flocage (26) dans une étape successive.
